# EUROPÄISCHE PATENTANMELDUNG

(11) **EP 1 176 053 A2**
(43) Veröffentlichungstag der Anmeldung: **30.01.2002**
(21) Anmeldenummer: 01116162.7
(22) Anmeldetag: 04.07.2001
(51) Int. Cl.: B60Q 1/26

(54) **Leuchte**

(30) Priorität: 18.07.2000 DE 10034767
(71) Anmelder: Hella KG Hueck & Co., 59552 Lippstadt (DE)
(72) Erfinder: Gronemeier, Frank, 59199 Bönen (DE); Lüder, Sascha, 33397 Rietberg (DE); Schulz, Rico, 59558 Lippstadt (DE)
(74) Vertreter: Hilleringmann, Jochen, Dipl.-Ing.

(57) **Zusammenfassung**

Die Erfindung betrifft eine Leuchte, insbesondere Positionsleuchte, für Fahrzeuge mit einem Gehäuse, in dem mindestens eine Lichtquelle angeordnet ist und mit einer eine Öffnung des Gehäuses abdeckenden Lichtscheibe, wobei die Lichtquelle als eine Anzahl von Leuchtdioden (5,7) ausgebildet ist, wobei zum einen ein eine Mehrzahl von gleichartigen ersten Leuchtdioden (5) gebildetes Leuchtfeld (13) zur Erzeugung einer Grundlichtstärkeverteilung (GL) und zum anderen mindestens eine weitere zweite Leuchtdiode (7) zur Erzeugung einer Vorzugslichtstärkeverteilung (VL) vorgesehen sind, so dass durch Überlagerung der Grundlichtstärkeverteilung (GL) und der Vorzugslichtstärkeverteilung (VL) eine vorgegebene Gesamtlichtstärkeverteilung (R) gebildet ist.

## Beschreibung

Die Erfindung betrifft eine Leuchte, insbesondere Positionsleuchte, für Fahrzeuge mit einem Gehäuse, in dem mindestens eine Lichtquelle angeordnet ist und mit einer eine Öffnung des Gehäuses abdeckenden Lichtscheibe.

Es ist üblich, Leuchten mit Glühlampen und einem Reflektor auszustatten, um beispielsweise als Positionslicht eine gewünschte Lichtstärkeverteilung zu erzeugen. Bei Kraftfahrzeugen finden Reflektoren Einsatz, die eine gleichmäßige Abstrahlung des Lichtes mit einer symmetrischen Lichtstärkeverteilung bewirken. Bei Luftfahrzeugen ist es bekannt, dass beispielsweise bei Anordnung einer Positionsleuchte an einem freien Ende eines Flügels unterschiedliche Lichtstärkeverteilungen in vertikaler und horizontaler Richtung vorgegeben sind. Nachteilig an einer solchen bekannten Leuchte ist, dass die Lichtstärke der Glühlampe relativ hoch ausgelegt sein muss, da zur Funktionsfähigkeit der von den Piloten eingesetzten Nachtsichtgeräte mittels eines zusätzlich an der Leuchte angebrachten lichtabsorbierenden Lichtfilters Lichtstrahlen bestimmter Wellenlänge herausgefiltert werden müssen. Durch die absorbierende Wirkung der Filter erfolgt eine Eigenerwärmung der Glühlampe, die zu einer Reduzierung der Lebensdauer führt.

Aufgabe der vorliegenden Erfindung ist es daher, eine Leuchte für Fahrzeuge derart weiterzubilden, dass die Erzielung einer vorgegebenen Lichtstärkeverteilung bei einem wirtschaftlichen Betrieb und einer relativ hohen Lebensdauer gewährleistet ist.

Zur Lösung dieser Aufgabe ist die Erfindung in Verbindung mit dem Oberbegriff des Patentanspruchs 1 dadurch gekennzeichnet, dass die Lichtquelle als eine Anzahl von Leuchtdioden ausgebildet ist, wobei zum einen ein eine Mehrzahl von gleichartigen ersten Leuchtdioden gebildetes Leuchtfeld zur Erzeugung einer Grundlichtstärkeverteilung und zum anderen mindestens eine weitere zweite Leuchtdiode zur Erzeugung einer Vorzugslichtstärkeverteilung vorgesehen sind, so dass durch Überlagerung der Grundlichtstärkeverteilung und der Vorzugslichtstärkeverteilung eine vorgegebene Gesamtlichtstärkeverteilung gebildet ist.

Der besondere Vorteil der Erfindung besteht darin, dass durch das Vorsehen von Leuchtdioden unterschiedlicher lichttechnischer Eigenschaften zum einen eine Grundlichtstärkeverteilung und zum anderen eine Vorzugslichtstärkeverteilung erzielbar ist, die durch Überlagerung eine vorgegebene Gesamtlichtstärkeverteilung ergeben. Grundgedanke der Erfindung ist es, durch eine Mehrzahl von gleichartig ausgebildeten Leuchtdioden ein Leuchtfeld zu bilden, mittels dessen eine Grundlichtstärkeverteilung erzeugt wird. Durch zusätzliche, üblicherweise leistungsstärkere zweite Leuchtdioden, die in einer bestimmten Vorzugsrichtung orientiert sind, kann in einem bestimmten Raumwinkelbereich eine Vorzugslichtstärkeverteilung erzeugt werden. Vorteilhaft kann durch Auswahl der zweiten Leuchtdioden bestimmter Lichtintensität bzw. Lichtstärkeverteilung eine gezielte Gesamtlichtstärkeverteilung konfiguriert werden. Durch den Einsatz von Leuchtdioden kann die Leistungsaufnahme der Leuchte verringert bzw. die Lebensdauer wesentlich vergrößert werden. Durch Auswahl der Leuchtdioden kann insbesondere eine Spektrum realisiert werden, die einen für den Betrieb des Nachtsichtgerätes störenden Wellenbereich ausspart. Das Filterglas entfällt und der Einsatz eines zusätzlichen Nachtsichtfilters ist nicht notwendig.

Nach einer besonderen Ausführungsform der Erfindung sind die ersten Leuchtdioden in einem gesonderten Grundlichtmodul zusammengefasst, das als kompakte Baueinheit ein Modulgehäuse mit lediglich zwei Anschlussstiften aufweist. Auf einem LED-Träger sind eine Mehrzahl der ersten Leuchtdioden zusammengeschaltet. Die Leuchtdioden können mit einer relativ großen Packungsdichte montiert sein. Vorteilhaft kann durch die Zusammenfassung der ersten Leuchtdioden auf dem LED-Träger eine Trennung der mechanischen und elektrischen Ankopplung des Grundlichtmoduls zu dem Gehäuse der Leuchte geschaffen werden. Die Montierbarkeit des Grundlichtmoduls wird vereinfacht, da nur zwei elektrische Anschlüsse vorgesehen sind. Durch die Zusammenfassung der ersten Leuchtdioden in dem Modulgehäuse können die ersten Leuchtdioden zum einen mechanisch geschützt und zum anderen mittels einer sicheren mechanischen und elektronische Verbindung innerhalb des Gehäuses der Leuchte angeordnet sein.

Nach einer Weiterbildung der Erfindung sind die ersten Leuchtdioden gitterartig auf der LED-Trägerplatte des Modulgehäuses angeordnet, so dass eine gleichmäßig und breit gestreute Lichtstärkeverteilung realisiert werden kann. Die ersten Leuchtdioden weisen vorzugsweise jeweils eine relativ geringe Leuchtstärke auf. Durch Überlagerung einer Vielzahl solcher regelmäßig angeordneter erster Leuchtdioden kann auf einfache Weise eine Grundlichtstärkeverteilung mit einem relativ konstanten Verlauf über einen Raumwinkelbereich erzielt werden.

Nach einer Weiterbildung der Erfindung ist das Grundlichtmodul auf einem ersten Halteteil und die weiteren zweiten Leuchtdioden auf einem zweiten Halteteil des Gehäuses angeordnet, wobei die Halteteile um einen vorgegebenen Winkel geneigt zueinander angeordnet sind. Vorteilhaft kann hierdurch der Maximalwert der Grundlichtstärkeverteilung einerseits und der Vorzugslichtstärkeverteilung andererseits räumlich festgelegt werden, so dass eine vorgegebene Gesamtlichtverteilung erzielt wird.

Nach einer Weiterbildung der Erfindung ist das Gehäuse der Leuchte an einem freien Ende eines Flügels eines Luftfahrzeugs angeordnet, wobei die Leuchte als Positionslicht dient. Das zweite Halteteil erstreckt sich senkrecht zur Flugrichtung, wobei die an dem zweiten Halteteil montierten zweiten Leuchtdioden in Flugrichtung orientiert sind. Das erste Teil erstreckt sich um einen spitzen Winkel zu dem zweiten Halteteil schräg nach hinten, so dass das Grundlicht hauptsächlich in seitlicher Richtung zur Fahrzeuglängsachse abgestrahlt wird.

Nach einer Weiterbildung der Erfindung ist in einem Grenzlinienbereich zwischen dem ersten und zweiten Halteteil ein Reflektorelement angeordnet, mittels dessen die von den zweiten Leuchtdioden emittierten Lichtstrahlen teilweise reflektiert werden. Das Reflektorelemente dient somit zur Erhöhung der von den zweiten Leuchtdioden ausgehenden Lichtstärke in bestimmte Raumwinkel. Darüber hinaus hat das Reflektorelement eine Blendenfunktion. Eine zu dem Grenzlinienbereich abgewandte Randkante des Reflektorelementes ist derart zu dem Grundlichtmodul ausgerichtet, dass in einem vorgegebenen Winkel eine exakte Abbildung der Hell-Dunkel-Grenze erzielt wird. Hierdurch kann eine Blendung des Piloten vermieden werden.

Nach einer Weiterbildung der Erfindung weist das Grundlichtmodul einen kuppelförmigen transparenten Deckel auf, der eine homogene Abstrahlcharakteristik ermöglicht.

Nach einer Weiterbildung der Erfindung ist auf einer in Flugrichtung orientierten Grundplatte eine Infrarotdiode positioniert. Hierdurch können optische Kennungsmuster zwischen den Mitgliedern einer Flugstaffel abgesandt werden zur Freund-Feind-Kennung. Da die Infrarotdiode von der Grundplatte seitlich nach außen abragt, erfolgt eine Hauptabstrahlrichtung senkrecht zur Flugrichtung, die eine direkte Blendung des Piloten vermeidet.

Nach einer Weiterbildung der Erfindung wird das Grundlichtmodul sowie die zweiten Leuchtdioden mittels einer gemeinsamen Regelschaltung angesteuert. Das Grundlichtmodul einerseits und die zweiten Leuchtdioden andererseits sind parallel zueinander geschaltet, wobei in Abhängigkeit von den jeweiligen in den Zweigen fließenden Teilströmen ein Gesamtstrom ermittelt wird, der als eingeprägte Speisestromstärke von der Regelschaltung an die Verbraucher abgegeben wird. Die Regelschaltung weist vorzugsweise einen Tiefsetzsteller sowie mindestens eine Konstantstromquelle auf, mittels derer die verbraucherabhängige Speisestromstärke eingeprägt wird.

Ein Ausführungsbeispiel der Erfindung wird nachfolgend anhand der Zeichnungen näher erläutert.

Es zeigen:

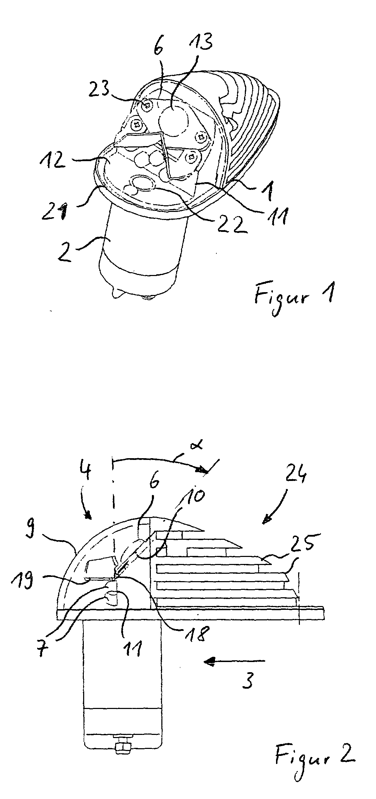

- Figur 1: eine perspektivische Vorderansicht einer Leuchte,

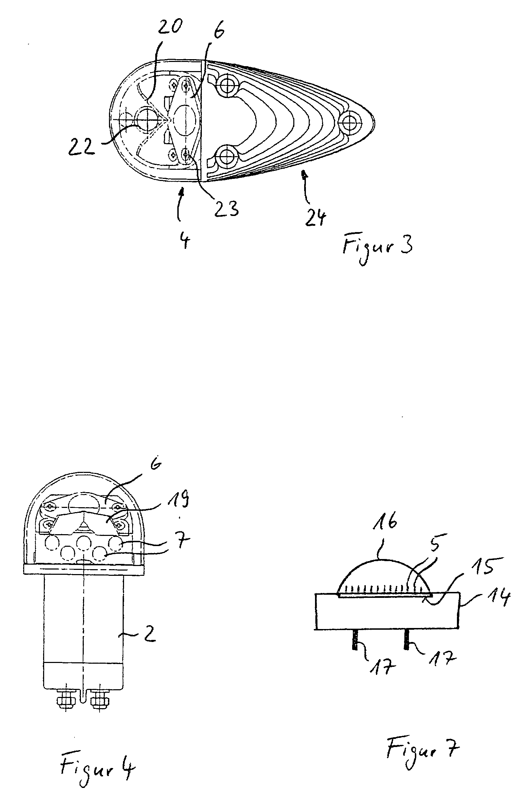

- Figur 2: eine Seitenansicht der Leuchte,
- Figur 3: eine Draufsicht auf die Leuchte,
- Figur 4: eine Vorderansicht der Leuchte,
- Figur 5: eine vertikale Gesamtlichtstärkeverteilung der Leuchte,
- Figur 6: eine horizontale Gesamtlichtstärkeverteilung der Leuchte,
- Figur 7: eine vergrößerte Seitenansicht eines Grundlichtmoduls und
- Figur 8: ein Blockschaltbild einer Ansteuerung für die Leuchte.

Die Leuchte findet Anwendung als Positionsleuchte für Luftfahrzeuge, insbesondere Flugzeuge oder Hubschrauber. Zu diesem Zweck ist die Positionsleuchte an einem freien Ende eines senkrecht zur Flugrichtung abragenden Flügels des Luftfahrzeugs angeordnet. Die Leuchte weist ein Gehäuse 1 auf, an dessen Grundseite sich ein zylinderförmiger Sockel 2 anschließt, der in einer Öffnung der Luftfahrzeugaußenhaut eingefasst und arretiert ist. Das Gehäuse 1 ist eiförmig ausgebildet, wobei es entgegen einer Flugrichtung 3 aerodynamisch günstig spitz zuläuft.

In einem in Flugrichtung 3 vorne liegenden Bereich des Gehäuses 1 ist eine Leuchtenkammer 4 vorgesehen, in der ein aus mehreren ersten Leuchtdioden 5 gebildetes Grundlichtmodul 6, eine Mehrzahl von zweiten Leuchtdioden 7 und ein Reflektorelement 19 angeordnet ist. Die Leuchtenkammer 4 wird durch eine klare Lichtscheibe 9 abgedeckt.

Das Grundlichtmodul 6 ist auf einem plattenförmigen ersten Halteteil 10 einerseits, und die zweiten Leuchtdioden 7 sind in einer Reihe seitlich versetzt auf einem in einem spitzen Winkel α geneigt zu dem ersten Halteteil 10 verlaufenden zweiten Halteteil 11 angeordnet. In Flugrichtung 3 schließt sich an das zweite Halteteil 11 unter einem rechten Winkel eine Grundplatte 12 an, die üblicherweise senkrecht zu einer Flügellängsachse angeordnet ist.

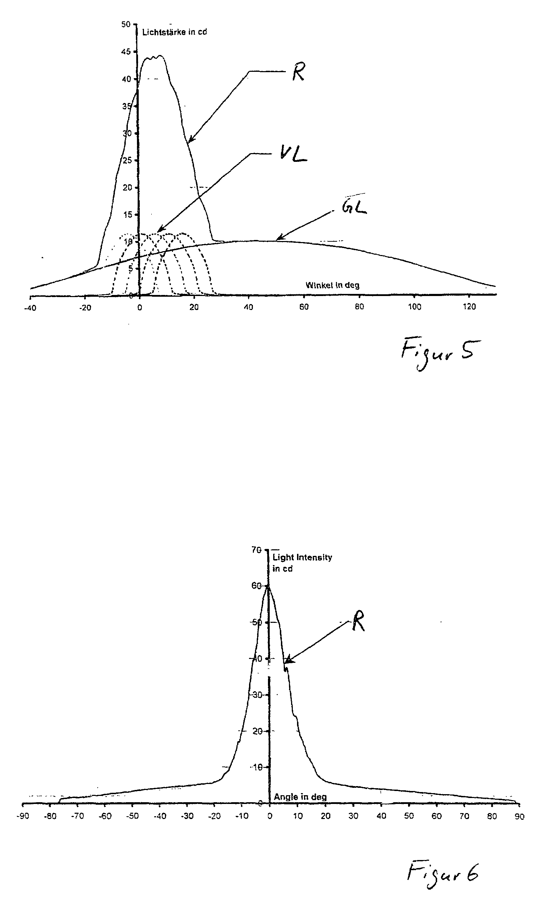

Das Grundlichtmodul 6 bildet ein kreisförmiges Leuchtfeld 13, das entsprechend Figur 6 eine kugelförmige Grundlichtstärkeverteilung GL erzeugt. In Figur 6 ist die Grundlichtstärkeverteilung GL in horizontaler Richtung dargestellt. Das Maximum der horizontalen Grundlichtstärkeverteilung GL liegt in einem Winkel von ca. 50 Grad; dieser Winkel entspricht dem Neigungswinkel α, um den das erste Halteteil 10 und das zweite Halteteil 11 geneigt ausgebildet ist.

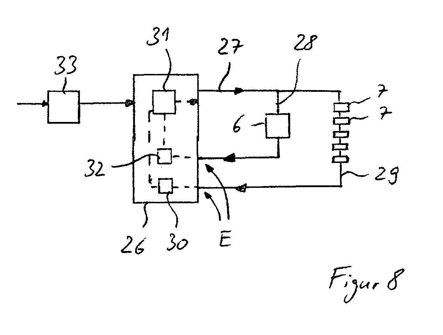

Wie besser aus Figur 7 ersichtlich ist, besteht das Grundlichtmodul 6 aus einem Modulgehäuse 14, in dem ein plattenförmiger LED-Träger 15 angeordnet ist. Auf dem LED-Träger 15 sind eine Mehrzahl von ersten Leuchtdioden 5 gitterförmig angeordnet. Die einzelnen ersten Leuchtdioden 5 weisen eine relativ geringe Lichtstärke auf. Durch die Überlagerung der Vielzahl von ersten Leuchtdioden 5 ist eine Lichtstärke erzielbar, die der Lichtstärke einer einzelnen zweiten Leuchtdiode 7 entspricht, siehe Figur 6. Der LED-Träger 15 wird durch einen kuppelförmigen transparenten Deckel 16 abgeschlossen, der eine Abstrahlung des von den ersten Leuchtdioden 5 abgestrahlten Lichtes in einem Raumwinkelbereich von etwa 170 Grad ermöglicht. Die ersten Leuchtdioden 5 sind auf dem LED-Träger 15 rasterartig in Zeilen und Spalten kontaktiert, so dass stets Leuchtdioden in Reihe und parallel zueinander geschaltet sind. Die Anschlüsse der ersten Leuchtdioden laufen auf dem LED-Träger 15 zusammen und werden zu zwei auf der Rückseite des Modulgehäuses 14 abragende Anschlussstifte 17 durchkontaktiert. Auf diese Weise wird eine kompakte und gesonderte Baueinheit geschaffen, die über einen großen Raumwinkelbereich eine relativ konstante Lichtstärkeverteilung erzeugt. Wie beispielhaft aus der Figur 6 ersichtlich ist kann diese Lichtverteilung zur Erzeugung der Grundlichtstärkeverteilung GL der Leuchte erzeugen. Durch Positionierung von beispielsweise fünf zweiten Leuchtdioden 7 an dem zweiten Halteteil 11 ergeben sich aufgrund der versetzt zueinander angeordneten Positionierung der zweiten Leuchtdioden 7 versetzt angeordnete Lichtstärkeverteilungen. Durch Überlagerung dieser Lichtstärkeverteilungen ergibt sich eine Vorzugslichtstärkeverteilung VL, die ein relativ hohes Maximum einer aus der Grundlichtstärkeverteilung GL und der Vorzugslichtstärkeverteilung VL zusammengesetzten Gesamtlichtstärkeverteilung R bewirkt. Aufgrund der Anordnung von fünf zweiten Leuchtdioden 7 ist das Maximum der Gesamtlichtverteilung R ca. fünfmal so groß wie das Maximum der Grundlichtstärkeverteilung GL. Auf diese Weise kann gezielt eine vorgegebene Gesamtlichtstärkeverteilung R in horizontaler und vertikaler Richtung erzeugt werden.

Da das Grundlichtmodul 6 in einem spitzen Winkel α geneigt zu der Flugrichtung 3 angeordnet ist, während die zweiten Leuchtdioden 7 in Flugrichtung 3 orientiert sind, trägt die Vorzugslichtstärkeverteilung VL der zweiten Leuchtdioden 7 hauptsächlich zur vertikalen Gesamtlichtstärkeverteilung R bei, siehe Figur 5. Die vertikale Gesamtlichtstärkeverteilung R ist symmetrisch zu dem Nullpunkt ausgerichtet.

Zur Erhöhung der Lichtstärke des Grundlichtmoduls 6 ist in einem Grenzlinienbereich 18 zwischen dem ersten und dem zweiten Halteteil 10, 11 das Reflektorelement 19 angeordnet, das einen Teil der von dem Grundlichtmodul 6 emittierten Lichtstrahlen reflektiert. Zusätzlich ist das Reflektorelement 19 derart relativ zu dem Grundlichtmodul 6 ausgerichtet, dass eine Randkante 20, die sich auf einer dem Grenzlinienbereich 18 abgewandten Seite des Reflektorelementes 19 befindet, exakt als eine Hell-Dunkel-Grenze für die Grundlichtstärkeverteilung GL abgebildet wird. Hierdurch kann beispielsweise die Hell-Dunkel-Grenze der Grundlichtstärkeverteilung auf 0 Grad eingestellt werden, nicht dargestellt in Figur 5. Damit der Pilot nicht von dem Licht des Grundlichtmoduls 6 geblendet wird, sind diese entgegen der Flugrichtung 3 versetzt zu einem vorderen Rand 21 der Grundplatte 12 angeordnet. Auf diese Weise kann die Grundplatte 12 als Abschirmung für das von den zweiten Leuchtdioden 7 emittierte Licht dienen.

Zusätzlich kann in der Grundplatte 12 eine Infrarotdiode 22 bündig eingefasst sein, mittels derer ein optisches Blinkmuster zur Freund-Feind-Kennung für Mitglieder einer Flugstaffel generierte werden kann.

Das Reflektorelement 19 und das Modulgehäuse 14 sind mittels Verschraubung 23 auf dem ersten Halteteil 10 befestigt. Entgegen der Flugrichtung 3 schließt sich an die Leuchtenkammer 4 ein Kühlkörper 24 mit einer Mehrzahl von scheibenförmig angeordneten Kühlrippen 25 an, der zur Kühlung der Leuchtenkammer 4 bzw. der elektronischen Bauteile dient. Die elektronischen Bauteile sind über geeignete wärmeleitende Materialien mit den Kühlrippen 25 gekoppelt.

Zur Ansteuerung des Grundlichtmoduls 6 einerseits und der zweiten Leuchtdioden 7 andererseits ist eine Regelschaltung 26 vorgesehen, die einen Tiefsetzsteller 31 aufweist, der die Bordspannung von 28 Volt Gleichspannung in eine niedrigere Gleichspannung umwandelt. Diesem Tiefsetzsteller oder Konverter 31 nachgeschaltet ist eine Konstantstromquelle, die in Abhängigkeit von dem Strombedarf der Verbraucher (Grundlichtmodul 6, zweite Leuchtdioden 7) eine Speisestromstärke 27 einprägt. Da das Grundlichtmodul 6 in einem ersten Zweig 28 und die zweiten Leuchtdioden 7 in Reihe zueinander in einem zweiten Zweig 29 parallel geschaltet sind, liegt in den Zweigen 28, 29 eine konstante Spannung an. Bei Ausfall einzelner zweiter Leuchtdioden 7 oder Ausfall der Verbraucher eines gesamten Zweiges kann ein die Grenzwerte berücksichtigender konstanter Speisestrom 27 angepasst werden. Zu diesen Zweck wird der Strom durch die Zweige 28 und 29 durch gesonderte Eingänge E der Regelschaltung 26 zurückgeführt. An den Eingang des zweiten Zweiges 29 schließt sich eine weitere Konstantstromquelle 30 an, die einen entsprechenden Einfluss auf einen die Speisestromstärke 27 abgebenden Konverter 31 ausüben kann. Der durch den ersten Zweig 28 zurückgeführte Strom wird in einer Referenzschaltung 32 weiterverarbeitet, die eine steuernde Funktion auf die Konstantstromquelle 30 bzw. den Konverter 31 ausübt.

Vorzugsweise kann der Regelschaltung 26 eine Schutzschaltung 33 vorgelagert sein, die nach einer Hysteresekennlinie den Speisestrom 27 bei einer Überspannung von größer als 48 V abschaltet und bei Unterschreiten einer vorgegebenen Spannungsschwelle wieder die Bereitstellung der vorgegebenen Speisestromstärke 27 ermöglicht. Zusätzlich kann die Schutzschaltung 33 einen Verpolschutz aufweisen, der eine Durchschaltung der Speisespannung nur bei korrekter Kontaktierung der Leuchtdioden bzw. des Grundlichtmoduls gewährt.

Nach einer alternativen Ausführungsform kann die Leuchtenkammer 4 auch ohne Reflektorelement ausgebildet sein. Es versteht sich, dass je nach Vorgaben, die Anzahl der zweiten Leuchtdioden 7 variiert bzw. dieselben reihenförmig oder in einem Feld nach Art eines Gitters angeordnet sein können.

## Patentansprüche

1. Leuchte, insbesondere Positionsleuchte, für Fahrzeuge mit einem Gehäuse, in dem mindestens eine Lichtquelle angeordnet ist und mit einer eine Öffnung des Gehäuses abdeckenden Lichtscheibe, **dadurch gekennzeichnet, dass** die Lichtquelle als eine Anzahl von Leuchtdioden (5, 7) ausgebildet ist, wobei zum einen ein eine Mehrzahl von gleichartigen ersten Leuchtdioden (5) gebildetes Leuchtfeld (13) zur Erzeugung einer Grundlichtstärkeverteilung (GL) und zum anderen mindestens eine weitere zweite Leuchtdiode (7) zur Erzeugung einer Vorzugslichtstärkeverteilung (VL) vorgesehen sind, so dass durch Überlagerung der Grundlichtstärkeverteilung (GL) und der Vorzugslichtstärkeverteilung (VL) eine vorgegebene Gesamtlichtstärkeverteilung (R) gebildet ist.

2. Leuchte nach Anspruch 1, **dadurch gekennzeichnet, dass** die ersten Leuchtdioden (5) in einem Grundlichtmodul (6) als gesonderte Baueinheit zusammengefasst sind, wobei die ersten Leuchtdioden (5) auf einem gemeinsamen LED-Träger (15) montiert sind, der sich in einem abgeschlossenen und mit einem transparenten Deckel (16) versehenen Modulgehäuse (14) erstreckt, und dass die ersten Leuchtdioden (5) derart zusammengeschaltet sind, dass lediglich zwei Anschlussstifte (17) aus dem Modulgehäuse (14) abragen.

3. Leuchte nach Anspruch 1 oder 2, **dadurch gekennzeichnet, dass** die ersten Leuchtdioden (5) gleichmäßig verteilt auf dem LED-Träger (15) angeordnet sind und dass die ersten Leuchtdioden (5) jeweils relativ zu der zweiten Leuchtdiode (7) eine wesentlich geringere Lichtstärke aufweisen.

4. Leuchte nach einem der Ansprüche 1 bis 3, **dadurch gekennzeichnet, dass** der LED-Träger (15) plattenförmig ausgebildet ist, auf dem die ersten Leuchtdioden (5) gitterartig angeordnet sind.

5. Leuchte nach einem der Ansprüche 1 bis 4, **dadurch gekennzeichnet, dass** die Vorzugslichtstärkeverteilung (VL) durch Überlagerung von mindestens drei nebeneinander angeordneten zweiten Leuchtdioden (7) gebildet ist, wobei die maximale Lichtstärke der zweiten Leuchtdiode zu der maximalen Gesamtlichtstärke des Grundlichtmoduls (6) korrespondiert.

6. Leuchte nach einem der Ansprüche 1 bis 5, **dadurch gekennzeichnet, dass** das Grundlichtmodul (6) auf einem ersten Halteteil (10) des Gehäuses (1) und die zweiten Leuchtdioden (7) auf einem zweiten Halteteil (11) des Gehäuses (1) angeordnet sind und dass das erste Halteteil (10) um einen Winkel (α) geneigt zu dem zweiten Halteteil (11) angeordnet ist zur Bildung einer asymmetrischen Gesamtlichtstärkeverteilung (R) in einer sich in der Richtung des Winkel (α) erstreckenden Ebene.

7. Leuchte nach einem der Ansprüche 1 bis 6, **dadurch gekennzeichnet, dass** das Gehäuse (1) an einem freien Ende eines Flügels eines Luftfahrzeugs angeordnet ist und dass zum einen das zweite Halteteil (11) im Wesentlichen senkrecht zu der Flugrichtung (3) und dass zum anderen das erste Halteteil (10) in einem spitzen Winkel (α) um eine Vertikalachse zu dem zweiten Halteteil (11) orientiert ist.

8. Leuchte nach einem der Ansprüche 1 bis 7, **dadurch gekennzeichnet, dass** in einem Grenzlinienbereich (18) zwischen dem ersten Halteteil (10) und dem zweiten Halteteil (11) ein Reflektorelement (19) abragt, das die von dem Grundlichtmodul (6) emittierten Lichtstrahlen und/oder die von den zweiten Leuchtdioden (7) emittierten Lichtstrahlen orthogonal zur Horizontalebene reflektiert.

9. Leuchte nach einem der Ansprüche 1 bis 8, **dadurch gekennzeichnet, dass** das Grundlichtmodul (6) einen kuppelförmigen transparenten Deckel (16) aufweist.

10. Leuchte nach einem der Ansprüche 1 bis 9, **dadurch gekennzeichnet, dass** auf einer senkrecht zu dem ersten Halteteil (10) und in Flugrichtung (3) orientierten Grundplatte (12) eine Infrarotdiode (22) positioniert ist.

11. Leuchte nach einem der Ansprüche 1 bis 10, **dadurch gekennzeichnet, dass** sich benachbart zu einer durch die Grundplatte (12), das erste Halteteil (10), das zweite Halteteil (11) und die Lichtscheibe (9) begrenzte Leuchtenkammer (4) ein Kühlkörper (24) mit einer Mehrzahl von scheibenförmig angeordneten Kühlrippen (25) anschließt.

12. Leuchte nach einem der Ansprüche 1 bis 11, **dadurch gekennzeichnet, dass** die zweiten Leuchtdioden (7) in Reihe in einem ersten Zweig (28) und dass das Grundlichtmodul (6) in einem zu dem ersten Zweig (28) parallelen zweiten Zweig (29) geschaltet sind, dass eine Regelschaltung (26) vorgesehen ist zur Einprägung einer Speisestromstärke (27) in den ersten und zweiten Zweig (28, 29), und dass der durch die Zweige (28, 29) fließende Strom getrennt zu der Regelschaltung (26) zurückgeführt wird, so dass in Abhängigkeit von den aktuellen Stromstärken der Zweige (28, 29) die Speisestromstärke (27) regelbar ist.

13. Leuchte nach Anspruch 12, **dadurch gekennzeichnet, dass** die Regelschaltung (26) einen Tiefsetzsteller (31) und mindestens eine Konstantstromquelle (30) aufweist.
